## Europäisches Patentamt

## European Patent Office

## Office européen des brevets

(11) Numéro de publication: **0 119 140**
**B1**

# (12) FASCICULE DE BREVET EUROPÉEN

(45) Date de publication du fascicule du brevet:
12.08.87

(51) Int. Cl.⁴: **H 04 L 25/49**

(21) Numéro de dépôt: **84400484.6**

(22) Date de dépôt: **09.03.84**

(54) Procédé et dispositifs de transcodage d'informations binaires pour transmission multiplexe temporelle.

(30) Priorité: **09.03.83 FR 8303827**

(43) Date de publication de la demande:
**19.09.84 Bulletin 84/38**

(45) Mention de la délivrance du brevet:
**12.08.87 Bulletin 87/33**

(84) Etats contractants désignés:
**BE DE FR IT NL SE**

(56) Documents cité:
**EP-A-0 028 405**
**EP-A-0 045 680**
**GB-A-1 569 076**
**GB-A-2 016 247**
**US-A-4 003 041**
**US-A-4 006 304**
**US-A-4 092 595**

(73) Titulaire: **LA TELEPHONIE INDUSTRIELLE ET COMMERCIALE TELIC ALCATEL Société Anonyme dite:, 206 Route de Colmar, F-67023 Strasbourg Cedex (FR)**

(72) Inventeur: **Gass, Raymond, 18, rue des Vergers Bolsenheim, F-67150 Erstein (FR)**

(74) Mandataire: **Weinmiller, Jürgen, Lennéstrasse 9 Postfach 24, D-8133 Feldafing (DE)**

**0 119 140**

## Description

La présente invention a pour objets un procédé et des dispositifs de transcodage d'informations binaires pour transmission multiplexe temporelle.

De manière classique évoquée notamment dans le chapitre 2.4.1 "Réseau Numérique intégré" du tome 1 de l'ouvrage intitulé "La commutation électronique" publié en 1980 dans la Collection Technique et Scientifique des Télécommunications placée sous les auspices du Centre National d'études des Télécommunications et éditée par les éditions Eyrolles à Paris, les informations binaires transmises par des liaisons de transmission multiplexe dans un réseau numérique intégré sont classiquement transcodées pour les équipements qui les émettent de manière à inclure des indications d'horloge et de synchronisation permettant aux équipements qui les reçoivent de les reconstituer par transcodage inverse.

En effet, classiquement on cherche à éviter la mise en place de liaisons spécifiques de transmission de signaux d'horloge et de synchronisation dès que les longueurs de transmission ne sont plus négligeables. Ainsi le document EP-A-28405 décrit un procédé et un dispositif pour la réduction de la gigue lors du transcodage par blocs de signaux numeriques, qui sont appliqués à des signaux transcodés à raison de quatre données binaires pour trois données ternaires et réciproquement. Simultanément on s'efforce de comprimer la bande passante hors-tout des signaux transmis afin de favoriser une transmission et par conséquent une restitution correcte des informations. On tâche aussi de permettre une détection intrinsèque des erreurs intervenant au niveau des transmissions. Souvent on cherche aussi a supprimer la composante continue du spectre des signaux transmis pour pouvoir isoler galvaniquement les liaisons de transmission par rapport aux équipements qu'elles relient.

Ceci a conduit a rechercher des codes de transmission présentant le meilleur compromis possible en fonction des exigences, tel le code HDB3 classiquement utilisé pour les transmissions multiplexes temporelles externes d'informations initialement codées en code binaire de type NRZ vers et à partir des terminaux de jonction externes de bon nombre de réseaux de commutation temporelle.

Une exigence supplémentaire classiquement non obtenue avec les transmissions multiplexes temporelles usuelles est que la totalité du debit nominal d'une liaison soit affectée à la transmission des informations binaires reçues par l'équipement qui les émet.

Ainsi par exemple la trame des transmissions multiplexes MIC primaires ne permet d'affecter que trente des trente deux voies à la transmission des informations binaires pour les besoins des utilisateurs, puisque les voies restantes servent à la signalisation et à la synchronisation. Si ceci est un inconvénient acceptable lorsque le nombre de voies temporelles inaccessibles aux utilisateurs est faible par rapport au nombre de voies disponibles, il n'en est plus de même dans le cas contraire. Or il est parfois nécessaire de disposer de liaisons temporelles ne comportant qu'un très petit nombre de voies, par exemple dans les centraux privés temporels de type multiservices comportant des équipements lents notamment distants.

Le document US-A-4 092 595 propose ainsi un système de transcodage d'informations binaires notamment pour transmission multiplexe temporelle qui permet d'une part la reconstitution des informations binaires après transmission, d'autre part la transmission d'indications supplémentaires, par exemple des indications de signalisation ou de synchronisation, tout en conservant un même débit d'informations binaires en présence ou en l'absence d'indications supplémentaires.

Pour se faire, les données binaires y sont groupées et transcodées, soit trois par trois, soit quatre par quatre, en groupes de trois éléments ternaires; deux groupes de trois éléments ternaires sont associés à chaque combinaison de trois ou de quatre éléments binaires, l'un correspondant à l'adjonction d'une indication supplémentaire prédéterminée à l'information que transmet l'autre.

Dans un tel système, il est important que la succession des éléments ternaires appartenant à des groupes ne transmettant pas d'indication supplémentaire ne puisse forfuitement imiter un groupe transmettant une indication supplémentaire et par exemple qu'une indication de verrouillage de trame puisse être malencontreusement imitée.

Pour se faire la présente invention propose un procédé et des dispositifs de trancodage pour transmission multiplexe temporelle permettant d'éliminer ces risques.

Dans le procédé de transcodage selon l'invention la données binaires successives constituant chaque information sont transcodées quatre par quatre, selon un code ternaire dans lequel chacun des groupements possibles de quatre valeurs binaires a pour correspondant une combinaison de quatre valeurs ternaires qui est choisie parmi deux combinaisons différentes affectées au groupement considéré, l'une des deux combinaisons affectées à un même groupement correspondant à l'adjonction d'une indication supplémentaire prédéterminée par rapport à l'autre combinaison, de manière à conserver un même débit d'informations binaires qu'il y est ou non transmission d'indications supplémentaires.

Selon une caractéristique de l'invention, les combinaisons qui correspondent à la transmission d'un groupement avec adjonction d'une indication complémentaire ont un poids supérieur à celui qui peut être obtenu par l'association de quatre valeurs successives prises dans deux combinaisons successives correspondant à la transmission de deux groupements sans adjonction d'indication supplémentaire, de manière à éviter toute imitation fortuite d'une combinaison porteuse d'une indication supplémentaire par la suite des données ternaires successivement transmises.

Selon une autre caractéristique de l'invention le dispositif décodeur comprend:
- un circuit de reconstitution d'horloge en sortie d'une liaison de transmission bifilaire,

2

**0 119 140**

- un convertisseur ternaire-binaire relié en sortie de liaison de transmission en parallèle avec le circuit de reconstitution d'horloge pour relever le niveau électrique sur chaque fil au rythme des signaux fournis par ce circuit de reconstitution de manière à fournir par groupes de quatre données, les données correspondant aux niveaux électriques relevés en succession sur chaque fil,

- un transcodeur binaire-binaire recevant simultanément les données émanant du convertisseur ternaire en deux groupes de quatre donnees pour en déduire soit un groupement de quatre valeurs binaires d'information ou de signalisation et éventuellement une indication supplémentaire, soit une indication d'anormalité,

- un circuit de récupération d'indication supplémentaire relié en sortie du transcodeur binaire-binaire et du circuit de reconstitution d'horloge pour contrôler la reconstitution des informations et des signalisations par le transcodeur.

L'invention, ses caractéristiques et ses avantages sont précisés dans la description qui suit, en relation avec les figures ci-dessous répretoriées.

La figure 1 présente un schéma de principe, partiel, d'une transmission multiplex temporelle permettant la mise en oeuvre du procédé de transcodage selon l'invention.

La figure 2 présente le schéma d'un dispositif codeur selon l'invention.

La figure 3 présente le schéma d'un dispositif décodeur selon l'invention.

La figure 4 présente un diagramme représentatif du fonctionnement d'un dispositif décodeur selon l'invention.

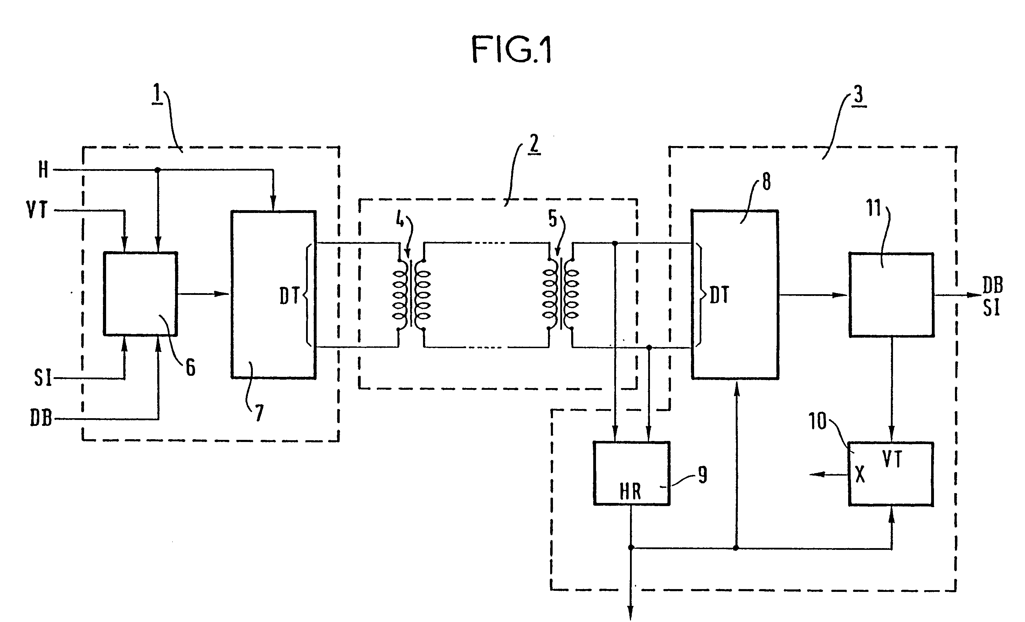

La transmission multiplexe temporelle partiellement représentée à la figure 1 est par exemple destinée à relier deux organes tels qu'un coupleur d'un réseau de commutation numerique a un terminal desservant un ou plusieurs appareils émetteurs et/ou récepteurs de donnees, ces divers éléments n'étant pas représentés ici dans la mesure où ils n'entrent pas dans le cadre de l'invention.

De manière usuelle cette transmission multiplexe temporelle comporte un dispositif codeur d'émission 1, recevant sous forme binaire des informations DB à transmettre multiplexées dans le temps entre elles et éventuellement avec des signalisations SI également sous forme binaire. L'ensemble des données binaires composant ces informations et ces signalisations parviennent classiquement au rythme des signaux d'une horloge H non figurée qui est affectée par exemple à l'organe auquel le dispositif codeur 1 est attribué.

Des indications supplémentaires VT sont également fournies sous contrôle de l'horloge a par exemple pour permettre la restitution des informations et des signalisations après transmission, ces indications supplémentaires VT sont classiquement des verrouillages de trame, ou éventuellement des étiquettes signalant le début et éventuellement la fin d'une information ou signalisation spécifique.

Le dispositif codeur 1 tel que présenté en figure 1, est relié à une liaison de transmission 2 ici unidirectionnelle sur laquelle il émet sous forme impulsionnelle, vers un décodeur de réception 3.

Dans l'exemple présenté la liaison de transmission 2 est symbolisée par une classique liaison bifilaire à laquelle le dispositif codeur 1 et le dispositif décodeur 3 sont reliés par l'intermédiaire de transformateurs d'entrée 4 et de sortie 5 qui assurent d'une part la transmission des impulsions du dispositif codeur à la liaison et d'autre part de cette liaison au dispositif décodeur.

Bien entendu selon une pratique usuelle la liaison de transmission 2 peut être associée à une liaison de transmission de sens inverse permettant des échanges bidirectionnels simultanés, elle peut également desservir un ou plusieurs dispositifs codeurs d'émission fonctionnant alternativement en relation avec un ou plusieurs dispositifs décodeurs de réception.

Selon une technique usuelle, les signaux binaires constituant les informations et signalisations à transmettre sont transcodés au niveau du dispositif codeur 1 afin de satisfaire au mieux aux objectifs de transmission que l'on s'est fixé et ils sont transcodés en sens inverse au niveau du dispositif décodeur 2 de manière à être restitués sous forme binaire pour les besoins de l'exploitation.

Selon un premier objectif, déjà évoqué plus haut, selon l'invention on cherche a transmettre simultanément les données binaires constituant les informations DB, les signalisations SI, les signaux d'horloge d'émission H et les indications supplémentaires VT. Ceci est obtenu au niveau du dispositif codeur 1 par un transcodeur binaire-binaire 6 associé à un convertisseur binaire-ternaire 7.

Au niveau du dispositif decodeur 3, un transcodeur binaire-binaire 11 en série avec un convertisseur ternaire-binaire 8 en sortie de liaison de transmission 2 permet de reconstituer les informations DB et les signalisations SI. Un circuit de reconstitution d'horloge 9 placé en parallèle avec le convertisseur ternaire-binaire 8 en sortie de liaison 2 fournit des signaux d'horloge HR qui correspondent aux signaux de l'horloge H ayant servi à l'émission par le dispositif codeur 1, il contrôle le transcodeur binaire-binaire 11.

Un circuit de contrôle 10 est également placé en sortie du convertisseur ternaire-binaire 8, afin de contrôler et exploiter les indications supplémentaires VT transmises, il reçoit les signaux de temps provenant du circuit de reconstitution d'horloge 9.

Comme on l'a vu plus haut, on cherche à réserver la plus grande partie possible du canal de transmission que forme la liaison 2 pour les informations binaires DB à transmettre et ce quelle que soit la taille du canal. Ainsi dans le cas de transmissions multiplexes temporelles 2 incluses dans un systeme de commutation temporelle non figuré comportant des canaux de différentes tailles allant par exemple de quatre à cent vingt huit voies par trame on s'efforce de réserver le plus grand nombre de voies et d'intervalles de temps de voie au trafic d'information binaires DB. Ceci peut impliquer par exemple une transmission des signalisations sous forme de messages permettant de libérer pour l'usage général les intervalles de temps d'une voie prévue pour les signalisations en l'absence de telles signalisations.

3

Selon l'invention on regroupe les donnees binaires successives à transmettre quatre par quatre, ce qui est généralement sans probleme car les informations binaires et les signalisations sont souvent composées d'octets ou de quartets ou de multiples de ces octets ou de ces quartets, comme cela est en particulier pour les signaux de parole codés MIC ou les signalisations par quartet des systèmes de commutation temporelle MIC selon l'avis G732 du CCITT.

Chaque groupement de quatre données binaires successives regroupées est ensuite transcodé selon un code ternaire dans lequel chacun des seize groupements possibles de quatre valeurs binaires a pour correspondant une combinaison de quatre valeurs ternaires qui est choisie parmi deux de trente-deux des quatre vingt et une combinaisons ternaires possibles.

Chaque groupement de quatre données binaires a donc pour correspondant deux combinaisons de quatre valeurs ternaires, l'une des combinaisons est associée à l'adjonction d'une indication supplémentaire prédéterminée par rapport à l'autre.

On peut ainsi transmettre par sélection d'une combinaison ou l'autre soit un groupement, soit ce groupement plus une indication supplémentaire tout en utilisant dans chaque cas uniquement quatre valeurs ternaires, cette indication supplémentaire VT est par exemple une indication de repérage transmises en même temps que les premières données d'un message ou que des données d'informations DB à transmettre.

Ainsi par exemple si les différentes données ternaires sont considérées comme susceptibles de prendre les valeurs +, - et 0 on aura par exemple les deux combinaisons - + - + et - - 0 - pour traduire le groupement binaire 0100 suivant qu'il est ou non affecté d'une indication supplémentaire.

Dans une variante de réalisation où les données ternaires sont destinées à être transmises sur une liaison relativement longue par l'intermédiaire de transformateurs on s'efforce d'éliminer les combinaisons de quatre valeurs ternaires qui sont les plus susceptibles de générer une composante continue, ce qui conduit à sélectionner les combinaisons en fonction de leur poids, celles de poids le plus faible étant préférable.

Dans la variante évoquée ci-dessus, on sélectionne aussi seize des dix-neuf combinaisons ternaires de poids nul, telle la combinaison + - - +, pour l'un des deux ensembles de seize combinaisons qui correspondent aux seize groupements de quatre valeurs binaires non associées à des indications supplémentaires dans la mesure où il correspond à l'ensemble le plus employé que l'on appelle C1.

On sélectionne aussi huit combinaisons de poids + 1 et huit combinaisons de poids - 1 pour le second ensemble C2 de seize combinaisons correspondant aux seize groupements de quatre valeurs binaires qui sont associés chacun à une indication supplémentaire, par exemple les combinaisons - 0 + - de poids - 1, et + 0 - + de poids + 1. Toutes les autres combinaisons sont considérées comme anormales et définissent un ensemble CX.

De plus dans la mesure où l'on désire profiter des transitions entre données ternaires pour reconstituer les signaux d'horloge H d'émission de données à la réception on s'efforce déviter les combinaisons conduisant seules ou en combinaison à des suites de zéro, telles les combinaisons ternaires 0 0 0 0 ou + 0 0 0 et 0 0 0 + ou encore - 0 0 0 et 0 0 0 -.

On évite les combinaisons conduisant à de trop longues impulsions, sans transition de par leurs éventuelles combinaisons, telles + + - - et - - + +.

On peut également choisir selon une autre variante de réalisation des combinaisons pour l'ensemble C2 qui soient très différentes des combinaisons C1 par leur organisation.

Ainsi dans le cas de liaisons relativement courtes, par exemple de moins de cinquante mètres pour lesquelles on veut un repérage rapide en cas de défaillance on choisit au contraire des combinaisons de l'ensemble C2 ayant un poids élevé de deux ou trois qui ne peuvent être imitées par les éléments ternaires composant les combinaisons de l'ensemble C1. En fonctionnement normal on transmet donc une succession de combinaisons appartenant à l'ensemble C1 entre lesquelles sont individuellement et régulièrement insérées des combinaisons appartenant à l'ensemble C2 , chaque combinaison C2 étant normalement séparée de tout autre combinaison C2 par une suite de combinaisons C1.

Dans les différentes variantes on s'efforce généralement d'éviter au maximum les éventuelles initations de combinaisons C2 par la suite des données ternaires constituant les combinaisons C1 au moins pendant les périodes où les confusions sont perturbatrices, notamment lorsque l'apparition d'une combinaison C2 est prévisible ou prévue.

En ce but en premier lieu on tient compte des éventuelles récurrences prévues pour les combinaisons C2, soit que par exemple l'on ait affaire à une récurrence cyclique comme celle obtenue lorsque les indications supplémentaires sont des indications de verrouillage de trame, ou à une récurrence acyclique fixe comme dans le cas de messages de longueur prédéterminée. Un simple comptage permet alors de vérifier si il y a bien transmission d'une conbinaison C2 à l'instant prévu et de déclencher une recherche en l'absence d'une telle combinaison à un tel instant.

En second lieu comme on l'a vu pour au moins certains cas où la confusion peut aisément être évitée, on empéche les imitations des combinaisons C2 par les données ternaires constituant les combinaisons C1 qui les entourent en s'arrangeant pour que ces données ternaires ne puissent constituer que des combinaisons ternaires C1 ou anormales c'est-à-dire non prévues parmi les trente deux combinaisons retenues.

En effet, si l'on a par exemple la succession de deux combinaisons CI telles que + - + -, - 0 + 0 il est clair que la prise en compte des quatre données ternaires médianes + -, - 0 correspond à une combinaison de poids - 1, qui peut correspondre soit à une combinaison anormale, soit à une combinaison C2, suivant les choix effectues. Ceci n'étant gênant qu'à partir du moment où le repérage des combinaisons est perdu ou incertain.

L'indication supplémentaire fournie par cette éventuelle fausse combinaison C2 est bien entendu elle aussi erronnée, par exemple lorsqu'elle signale à tort un verrouillage de trame.

Dans la mesure où on ne peut totalement éviter les risques de confusion et où en particulier la suite des combinaisons établies à partir des informations binaires DB à transmettre n'est pas prévisible au niveau de la liaison de transmission 2, on réserve les possibilités existantes à certaines combinaisons d'intérêt commun, par exemple à la mise sous tension en cas d'informations de vide, de perte de verrouillage en amont de la liaison, ou en cas de verrouillage de trame MIC.

On s'arrange par exemple pour que les combinaisons ternaires C1 choisies pour les informations de vide, de perte de verrouillage ou de verrouillage de trame MIC ne puissent avoir des configurations de données ternaires pouvant imiter une combinaison C2.

Ainsi dans le cas d'une succession d'informations binaires DB vides, qui sont classiquement générées sous forme d'une succession de données binaires de valeurs alternées par les codecs MIC on choisit de transcoder chaque groupement de données binaires 0 1 0 1 par une combinaison ternaire C1 égale à 0 0 + - donnant donc naissance à une suite 0 0 + - 0 0 + - 0 0 + - qui conduit à des quartets de poids nul correspondants soit à une combinaison C1 juste 0 0 + - soit à une combinaison C1 erronnée ou non prévue telles 0 + - 0, + - 0 0 ou - 0 0 + si la première donnée prise en compte pour un quartet est la seconde, la troisième ou la quatrième de la suite. Ceci sans que jamais l'un des décalages ne puissent jamais correspondre à une combinaison C2 qui est nécessairement de poids unité affecté d'un signe positif ou négatif.

Il en est de même dans le cas d'une succession d'informations indiquant une perte de verrouillage en amont de la liaison par une succession de valeurs binaires unité qui est traduite par la combinaison ternaire C1 égale à 0 + 0 - donnant naissance à une suite 0 + 0 - 0 + 0 -..... qui ne comprend que des combinaisons C1 de poids nul quel que soit la donnée ternaire prise comme première donnée pour une combinaison de quatre données successives, et qui ne peut donc pas donner naissance à une combinaison C2 de poids unité.

De même dans le cas d'un verrouillage de trame MIC classique les deux combinaisons ternaires successives correspondant à un tel verrouillage sont + - 0 0 + 0 - 0 qui donnent naissance à des combinaisons C1 erronnées - 0 0 + ou 0 + 0 -, 0 0 + -, mais pas à une combinaison C2.

A titre d'exemple un jeu de combinaisons retenues est ici présenté dans le tableau ci-dessous comportant seize groupements de quatre valeurs binaires référencés 0 à 9 et A à F et les deux combinaisons ternaires C1 et C2 qui correspondent à chaque groupement

| Groupement | C1 | C2 |
|---|---|---|
| 0 | 0 - 0 + | - 0 + - |
| 1 | 0 + 0 - | + 0 - + |
| 2 | + - - + | + - 0 + |
| 3 | - 0 + 0 | - + 0 - |
| 4 | 0 - + 0 | 0 - - + |
| 5 | + 0 0 - | 0 + + - |
| 6 | - + + - | + 0 + - |
| 7 | 0 + - 0 | - 0 - + |
| 8 | - 0 0 + | - + - 0 |
| 9 | + - 0 0 | - + 0 + |
| A | 0 0 + - | - + + 0 |
| B | + 0 - 0 | 0 - + - |
| C | + - + - | + - 0 - |
| D | - + 0 0 | + - + 0 |
| E | - + - + | 0 + - + |
| F | 0 0 - + | + - - 0 |

Un tel code présente l'avantage d'être bien adapté à la transmission sur des liaisons relativement longues en raison des combinaisons retenues qui conduisent à une composante continue négligeable.

Quelque soit le choix, le dispositif codeur destiné à produire ces combinaisons a pour avantage important sa simplicité ainsi que le montre la suite de la description.

Ce dispositif codeur est constitué comme il a été dit plus haut par un transcodeur binaire-binaire 6 et un convertisseur binaire-ternaire 7 insérés en série entre les sources d'informations binaires Db et de signalisation Si et l'enroulement primaire 13 du transformateur d'entrée 4 de la liaison 2.

Le transcodeur 6 comporte essentiellement une mémoire à lecture seule 14 qui contient différentes associations de données binaires permettant de convertir chacun des seize groupements possibles de quatre valeurs binaires en l'une où l'autre de deux combinaisons ternaires.

La production de signaux ternaires +, -, 0 au niveau de l'enroulement primaire 13 s'obtient de manière simple par émission d'une impulsion soit au niveau de l'une des deux bornes d'extrémités A et B de l'enroulement primaire soit au niveau de l'autre pour les signaux + etet par une absence d'émission pour le signal 0, étant entendu que cette émission est rythmée par l'horloge H de l'organe desservi par le dispositif codeur 1 alimentant l'enroulement primaire 13.

En ce but le convertisseur 7 comporte deux registres à décalage 15 et 16 identiques, de type parallèle-série, ayant chacun leur sortie série reliée à l'une des bornes A et B de l'enroulement 13 via un agencement de mise en forme d'impulsion ici symbolisé par un montage amplificateur 17 ou 18.

Les registres à décalage 15 et 16 sont synchronisés par l'horloge d'émission H, ils sont prévus pour contenir chacun une succession de bits un ou zéro conduisant respectivement à l'émission ou non d'une impulsion sur la borne que chacun dessert pendant un temps d'horloge d'émission H, fourni à l'entrée de lecture R de chacun des registres.

En ce but, la mémoire à lecture seule 14 fournit tous les quatre temps d'horloge quatre données binaires à chacun des registres 15 et 16 contrôlés en ce but via leur entrée d'écriture W.

Dans une forme préférée de réalisation chaque groupement de quatre données binaires adresse l'une ou l'autre de deux associations de huit données binaires en mémoire à lecture seule 14, suivant la présence ou non d'une indication supplémentaire à émettre. Les huit données binaires d'une association sont scindées en deux groupes de quatre données et ces groupes sont simultanément transmis en parallèle aux deux registres 15 et 16 aux fins d'émission.

Pour cela, la mémoire à lecture seule 14 contient trente-deux associations individuellement adressables de huit données binaires, ces trente deux associations sont réparties en deux groupes de seize et chaque groupe correspond à l'un des deux ensembles de seize combinaisons ternaires C1 ou C2.

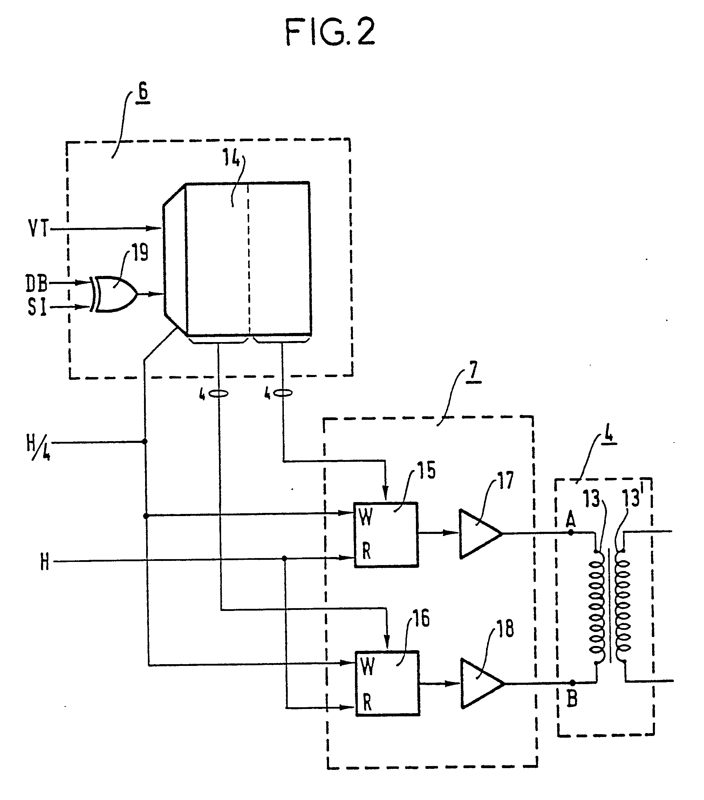

L'adressage en lecture de la mémoire à lecture seule 14 s'effectue à l'aide d'un signal d'horloge H/4 obtenu à partir du signal H et du signal d'indication supplémentaire VT qui sélectionne l'un où l'autre des deux groupes de seize associations suivant sa présence ou son absence, l'adressage de chaque association dans son groupe s'effectuant à partir d'un des seize groupements de quatre données binaires. En ce but, les informations binaires DB et la signalisation SI sont fournis quartet par quartet aux entrées d'adressage de la mémoire à lecture seule 14 en parallèle avec l'indication supplémentaire VT de manière à former un quintet d'adressage, étant entendu que les informations binaires DB et la signalisation SI sont mutuellement exclusives ainsi que le symbolise une porte 19 de type OU exclusif présentée figure 2 et que la mémoire à lecture seule 14 est lue tous les quatre temps d'horloge d'émission (signal H/4).

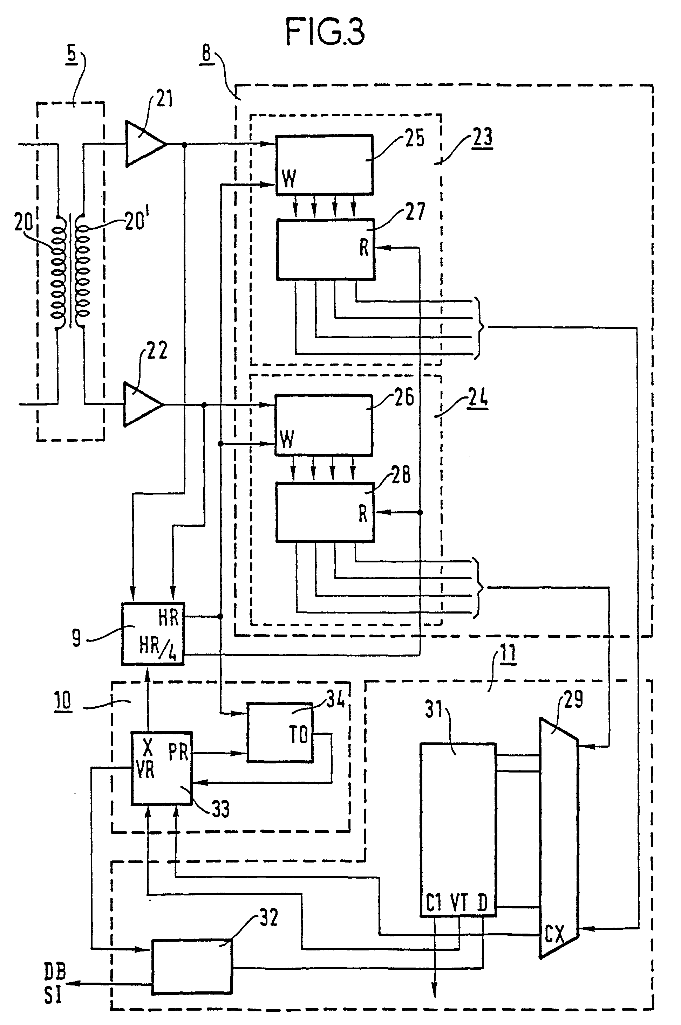

Le dispositif décodeur 2 (figure 3) est également de constitution simple, il comporte deux classiques circuits 21, 22 de mise en forme des signaux reçus qui sont placés aux bornes du secondaire 20' du transformateur de sortie 5. Ces circuits de mise en forme 21, 22 alimentent le circuit de reconstitution d'horloge 9 qui met classiquement à profit les transitions des signaux en sortie des circuits de mise en forme pour fournir un signal d'horloge reconstitue reproduisant les signaux d'horloge a ayant présidé à l'émission par le dispositif codeur 1 ainsi qu'indiqué plus haut.

Les circuit de remise en forme 21 et 22 alimentent également deux unités de registres 23 et 24 du convertisseur ternaire-binaire 8 qui enregistrent chacun le niveau du signal en sortie d'un circuit de mise en forme au rythme du signal d'horloge reconstitué HR.

Chaque unité de registre comporte par exemple un premier registre à entrée série et sorties parallèles 25 et 26, l'entrée de chacun de ces registres est reliée en sortie d'un circuit de remise en forme 21 et 22 et les sorties de chacun sont connectées aux bornes d'entrée d'un second registre 27 ou 28 de type à entrées et sorties parallèles.

L'écriture en premiers registres 25, 26 s'effectue simultanément au rythme de l'horloge reconstituée HR et la lecture des seconds registres 27, 28 s'effectue au rythme de l'horloge reconstitué HR/n avec n égal au nombre de bits en parallèle dans chaque registre, soit n = 4 dans l'exemple présenté.

Les sorties des registres 27 et 28 sont reliées à autant d'entrées d'un décodeur 29 assurant l'adressage d'une mémoire à lecture seule 31 dans le transcodeur binaire-binaire 11.

Cette mémoire à lecture seule 31 a des sorties du type trois états et elle ne comporte que trente deux lignes correspondant aux trente deux combinaisons retenues qui sont seules susceptibles de l'activer. Chaque ligne comprend un groupement de quatre données binaires et une indication C1 ou VT relative à l'ensemble de combinaisons C1 ou C2 qui a permis son adressage.

A chaque adressage par huit bits fournis simultanément par les registres 27, 28 correspond donc soit la transmission parallèle de quatre données binaires de la mémoire 31 vers un registre d'émission 32 si la combinaison d'adressage est l'une des trente deux combinaisons prévues, soit une indication CX en sortie de décodeur 29 si la combinaison d'adressage est différente.

En ce but les huit bits fournis par les deux seconds registres 27, 28 tous les quatre temps d'horloge HR sont appliqués à une matrice de compactage incorporée au décodeur 31 qui en déduit une combinaison de cinq bits destinée à servir à l'adressage des lignes de la mémoire à lecture seule 31 où à fournir l'indication CX éventuellement associée à des indications annexes non répertoriées ici.

Les indications C1 et VT sont fournies avec les données binaires D en sortie de mémoire 31 et une indication d'anormalité CX permet de signaler toute combinaison d'adressage anormale, c'est-à-dire non comprise dans les trente-deux combinaisons prévues.

L'indication VT est fournie à un automate contrôleur 33 du circuit de contrôle 10, elle est combinée avec une information de verrouillage interne TO fournie par un compteur-décompteur 34 qui reçoit une indication du circuit de reconstitution d'horloge 9 tous les "m" temps d'horloge "m" étant choisi égal à quatre dans l'exemple choisi ou la trame comporte quatre voies et où il y a un verrouillage de trame toutes les quatre voies.

L'automate contrôleur 33 dont le fonctionnement est évoqué ci-dessous fournit un signal de prépositionnement au décompteur 34, un signal de verrouillage récuperé VR pour le registre d'émission 32 qui alimente en données reçues l'organe desservi par le dispositif décodeur 3 ici considéré et un signal de contrôle X de la commande de lecture HR/4 des seconds registres 27, 28 tous les quatre temps d'horloge HR en liaison avec le circuit de récupération d'horloge 9.

Le signal CX est utilisé pour modifier le temps de lecture des registres 27 et 28 en cas de mauvais calage.

En ce but le signal CX est transmis à l'automate contrôleur 33 qui, par le signal de contrôle X, est apte à décaler le signal HR/4 de commande de lecture d'un nombre prédéterminé de temps d'horloge HR par exemple trois de manière à tenter de retrouver l'indication de verrouillage C2 perdue.

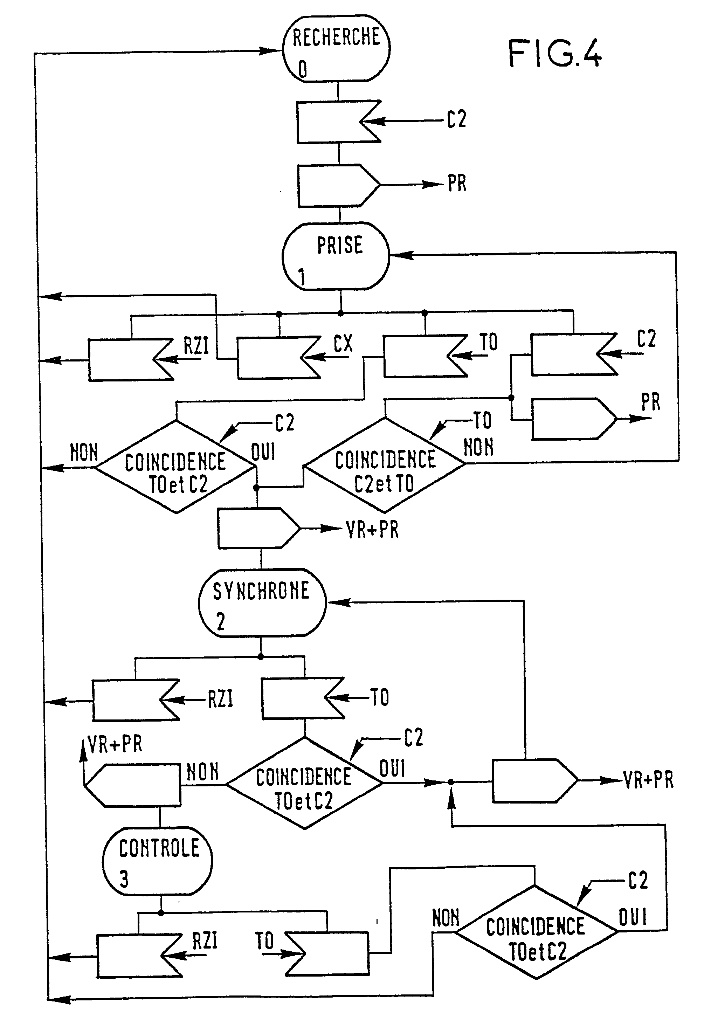

Les différentes opérations réalisées par le dispositif décodeur 3 et les différents états atteints sont symbolisés par le diagramme présenté figure 4 pour un système dans lequel c'est une indication de verrouillage de trame temporelle qui constitue l'indication supplémentaire VT transmise par codage des quartets au moyen des combinaisons choisies dans l'ensemble C2.

La première opération nécessaire au fonctionnement du dispositif décodeur 3 en début de transmission est la recherche de verrouillage correspondant à un état référencé "0" sur la figure 4, elle doit permettre de décoder convenablement les données reçues ultérieurement.

L'élément déterminant est la réception d'une combinaison de l'ensemble C2 par le transcodeur 11 via les registres 23 et 24.

A la mise en marche de la liaison une telle combinaison C2 est généralement utilisée pour le premier quartet émis et permet donc de synchroniser immédiatement le décodeur 3, elle se traduit par l'apparition d'un signal VT en sortie de mémoire a lecture seule 31.

Le transcodeur 11 assure alors le prépositionnement du décompteur 34 à sa position initiale pour le comptage d'un temps égal à la durée d'une trame à la fin duquel ce décompteur émettra un signal de verrouillage interne TO, le prépositionnement est assuré par un signal PR de l'automate de contrôle 33.

Ceci occasionne le passage du dispositif décodeur 3 de l'état de recherche à un état de prise référencé 1 sur la figure 4 pour lequel toute transmission des données reçues vers l'organe récepteur est bloquée par absence de signal VR de même que dans l'état "0" précédent. A partir de cet état "1", les éléments normalement déterminants sont la réception d'une seconde combinaison C2 de valeur identique ou différente, simultanément avec un signal de verrouillage interne TO fourni par le décompteur 34. En ce cas à réception du signal VT l'automate de contrôle 33 émet le signal de prépositionnement PR vers le décompteur 34 et un signal de verrouillage récupéré VR permettant la transmission des quatre valeurs binaires paraissant en parallèle en sortie D de mémoire 31 en vue de leur émission par le registre d'émission 32 vers l'organe récepteur que dessert le dispositif décodeur 3.

L'état atteint est alors un état de synchronisme référencé "2" sur la figure 4.

Un autre élément déterminant à partir de l'état "1" est la réception d'une combinaison C2 préalablement à l'écoulement d'une trame depuis la précédente combinaison C2, c'est-à-dire avant réception d'un verrouillage de trame interne TO.

Ceci indique que l'une des deux combinaisons C2 successivement reçues est imitée et l'on considère arbitrairement que la dernière combinaison reçue est la bonne en repositionnant le décompteur 34 en position initiale par l'intermédiaire du signal PR et à réception du signal VT, en revenant à l'état de prise "1", pour la suite de la procédure.

Un élément déterminant supplémentaire à partir de l'état 1 est la réception d'un verrouillage de trame interne TO avant réception d'une autre combinaison C2. Ceci conduit à un retour à l'état initial de recherche référencé "0" dans la mesure où la combinaison C2 ayant préalablement conduit à l'état "1" était probablement une imitation due à un mauvais calage.

L'apparition d'une combinaison de l'ensemble CX constitue également un élément déterminant à partir de l'état de prise "1" dans la mesure où il traduit une faute de transmission ou de codage que le décodeur 29 sait différencier, il conduit à un retour à l'état de recherche "0", avec un décalage qui est par exemple de trois bits au niveau de chaque ensemble de registres 23, 24, sous le contrôle du signal X.

On notera également la possibilité de mise en recherche par une information de remise à zéro RZI par l'organe desservi, cette possibilité ne sera pas développée ici plus avant.

Lorsque le synchronisme a été établi (état "2"), l'élément déterminant est la réception d'un verrouillage de trame interne TO qui déclenche la vérification d'existence simultanée ou coincidence d'une combinaison C2 traduite par la présence d'un signal VT au niveau de l'automate de contrôle 33.

Si une telle coincidence existe il y a émission d'un signal de verrouillage récupéré VR vers le registre d'émission pour valider l'émission et un nouveau signal PR de repositionnement à l'état initial de comptage du décompteur 26. L'automate reste à l'état synchronisé "2".

Si la coincidence ne se produit pas, il y a émission des signaux VR et PR, l'automate passe à un état de contrôle "3" dans lequel il attend normalement la reception d'un second verrouillage de trame interne TO pour vérifier une nouvelle fois la coincidence avec une combinaison C2. Si cette coincidence se produit l'automate revient dans son état synchronisé "2" et émet les signaux VR et PR, au cas contraire l'automate repasse a son état initial de recherche de synchronisation "0".

## Revendications

1. Procédé de transcodage d'informations binaires, pour transmission multiplexe temporelle, dans lequel les données binaires successives constituant chaque information sont transcodées quatre par quatre, selon un code ternaire dans lequel chacun des groupements possibles de quatre valeurs binaires a pour correspondant une combinaison de quatre valeurs ternaires qui est choisie parmi deux combinaisons différentes affectées au groupement considéré, l'une des deux combinaisons affectées à un même groupement correspondant à l'adjonction d'une indication supplémentaire prédéterminée par rapport à l'autre, de manière a conserver un même débit d'informations qu'il y est ou non transmission d'indications supplémentaires caractérisé en ce que les combinaisons qui correspondent à la transmission d'un groupement avec adjonction d'une indication supplémentaire ont un poids supérieur à celui qui peut être obtenu par l'association de quatre valeurs successives prises dans deux combinaisons successives corresponddant à la transmission de deux groupements sans adjonction d'indication supplémentaire, de manière à éviter toute imitation fortuite d'une combinaison porteuse d'une indication supplémentaire par la suite des données ternaires successivement transmises.

2. Dispositif décodeur pour la mise en oeuvre du procédé selon la revendication 1 comporte:
- un circuit de reconstitution d'horloge (9) en sortie d'une liaison de transmission (2) bifilaire,
- un convertisseur ternaire-binaire (8) relié en sortie de la liaison de transmission (2) en parallèle avec le circuit de reconstitution d'horloge (9) pour relever le niveau électrique de chaque fil au rythme des signaux fournis par ce circuit d'horloge (9), de manière à fournir par groupes de quatre données les données correspondant aux niveaux électriques relevés en succession sur chaque fil,
- un transcodeur binaire-binaire (11) recevant simultanément les données émanant du convertisseur ternaire-binaire (8) en deux groupes de quatre données pour en déduire soit un groupement de quatre valeurs binaires d'information ou signalisation (DB, SI) et éventuellement une indication supplémentaire (VT), soit une indication d'anormalite (CX)
- un circuit de contrôle (10) relié en sortie du transcodeur binaire-binaire (11) et du circuit de reconstitution d'horloge (9) pour contrôler la reconstitution des informations (DB) et de signalisation (SI) par ce transcodeur (11).

3. Dispositif décodeur selon la revendication 2, caractérisé en ce que le convertisseur ternaire-binaire (8) est composé de deux unités de registres (24, 25) respectivement insérées entre une borne du secondaire d'un transformateur de sortie (5) de liaison de transmission (2) et le transcodeur binaire-binaire (11) de manière à fournir chacun quatre par quatre les données qu'ils reçoivent à un rythme donné par le circuit de reconstitution d'horloge (9).

4. Dispositif décodeur selon la revendication 2, caractérisé en ce que le transcodeur binaire-binaire (11) comporte une mémoire à lecture seule (31) dont les entrées d'adressage sont reliées en sortie d'un décodeur (29) à huit entrées reliées aux sorties des unités de registres (24, 25), de manière à fournir pour chaque adressage soit un groupement de quatre valeurs binaires (DB ou SI) et éventuellement une indication supplémentaire (VT) soit une indication d'anormalité (CX).

5. Dispositif décodeur selon la revendication 2, caractérisé en ce que le circuit de contrôle (10) comporte un automate de contrôle (33) et un compteur-décompteur (34), l'automate de contrôle recevant une information de verrouillage interne (10) fournie par le compteur-décompteur (34) et l'indication supplémentaire (VT) fournie par le transcodeur binaire-binaire (11), le compteur-décompteur (34) recevant des signaux de repositionnement (PR) à réception d'une indication supplémentaire et les signaux d'horloge (HR) issus du circuit de reconstitution (9) sur son entrée d'horloge.

6. Dispositif codeur pour la mise en oeuvre du procédé selon la revendication 1, comportant un transcodeur binaire-binaire (6) fournissant une association différente de huit données binaires pour chacun des groupements possibles de quatre valeurs binaires (DB ou SI) affecté ou non d'une indication supplémentaire et un convertisseur binaire-ternaire scindant chaque association de huit données binaires issus du transcodeur en deux groupes de quatre données, de manière à transmettre sur une liaison de transmission (2) un signal résultant obtenu en prenant en compte simultanément une donnée binaire de chaque groupe de quatre, caractérisé en ce que le transcodeur binaire-binaire (6) comporte essentiellement une mémoire à lecture seule (14) contenant de manière individuellement adressable les différentes associations de huit données binaires mises en oeuvre dans le procédé, l'adressage étant assuré par l'intermédiaire d'une entrée d'indication supplémentaire (VT) et de quatre entrées de données binaires d'information (DB) et/ou de signalisation (SI), sous le contrôle d'une horloge (H/4).

**Patentansprüche**

1. Verfahren zum Umkodieren binärer Informationen für die Zeitmultiplexübertragung, bei dem die aufeinanderfolgenden jede Information bildenden Daten in Gruppen von je vier Bits gemäß einem ternären Kode umkodiert werden, in dem jede der möglichen Gruppierungen von vier Binärwerten einer Kombination von vier ternären Werten entspricht, die aus zwei unterschiedlichen, der betrachteten Gruppierung zugeordneten Kombinationen ausgewählt wird, wobei eine dieser einer gemeinsamen Gruppierung zugeordneten Kombinationen der Hinzufüng einer zusätzlichen bezüglich der anderen Kombination vorbestimmten Angabe entspricht, so daß ein gleicher Informationsstrom beibehalten wird, ob zusätzliche Angaben übertragen werden oder nicht, dadurch gekennzeichnet, daß die Kombinationen, die der übertragung einer Gruppierung mit Hinzufügung einer zusätzlichen Angabe entsprechen, eine höhere Gewichtung besitzen als durch Assoziierung von vier aufeinanderfolgenden Werten erhalten wird, die aus zwei aufeinanderfolgenden Kombinationen entsprechend der übertragung zweier Gruppierungen ohne Hinzufügung der zusätzlichen Angabe entnommen wurden, so daß jede versehentlich Nachahmung einer eine zusätzliche Information tragenden Kombination durch die Folge der aufeinanderfolgend übertragenen ternären Daten vermieden wird.

2. Dekodiervorrichtung zur Durchführung des Verfahrens nach Anspruch 1, dadurch gekennzeichnet, daß sie aufweist:
- einen Taktwiedergewinnungskreis (9) am Ausgang einer Zweidraht-Übertragungsverbindung (2),
- einen Ternär-Binär-Wandler (8), der an den Ausgang der Übertragungsverbindung (2) parallel zum Taktwiedergewinnungskreis (9) angeschlossen ist, um das elektrische Potential jedes Drahts im Rhythmus der vom Taktkreis (9) gelieferten Signale zu erfassen, so daß die Daten, die den nacheinander auf jedem Draht erfaßten elektrischen Potentialen entsprechen, in Gruppen von je vier Daten geliefert werden,
- einen Binär-Binär-Umkodierer (11), der zugleich die vom Ternär-Binär-Wandler (8) in zwei Gruppen von vier Daten kommenden Daten empfängt und daraus entweder eine Gruppierung von vier binären Informations- oder Signalisationswerten (DB, SI) und gegebenenfalls eine zusätzliche Angabe (VT), oder eine Angabe (CX) über eine Unregelmäßigkeit ableitet,
- einen Kontrollkreis (10), der an den Ausgang des Binär-Binär-Umkodierers (11) und des Taktwiedergewinnungskreises (9) angeschlossen ist, um die Rekonstitution der Informations(DB) und der Signalisationswerte (SI) durch diesen Umkodierer (11) zu kontrollieren.

3. Umkodiervorrichtung nach Anspruch 2, dadurch gekennzeichnet, daß der Ternär-Binär-Wandler (8) aus zwei Registereinheiten (24, 25) zusammengesetzt ist, die zwischen eine Sekundärklemme eines Ausgangstransformators (5) der Übertragungsverbindung (2) bzw. den Binär-Binär-Umkodierer (11) eingefügt sind, so daß jedes die empfangenen Daten in Vierergruppen in einem vom Taktwiedergewinnungskreis (9) vorgegebenen Rhythmus ausgibt.

4. Dekodiervorrichtung nach Anspruch 2, dadurch gekennzeichnet, daß der Binär-Binär-Umkodierer (11) einen reinen Lesespeicher (31) aufweist, dessen Adresseneingänge an die Ausgänge eines Dekodierers (29) angeschlossen sind, dessen acht Eingänge an die Ausgänge der Registereinheit (24, 25) angeschlossen sind, so daß für jede Adressierung entweder eine Gruppierung von vier Binärwerten (DB oder SI) und ggfs. eine zusätzliche Angabe (VT) oder eine Angabe über eine Unregelmäßigkeit (CX) geliefert wird.

5. Dekodiervorrichtung nach Anspruch 2, dadurch gekennzeichnet, daß der Kontrollkreis (10) einen Kontrollautomaten (33) und einen Vorwarts-Rückwärtszähler (34) aufweist, wobei der Kontrollautomat eine interne Verriegelungsinformation (TO) vom Vorwärts-Rückwärtszähler (34) und eine zusätzliche Angabe (VT) vom Binär-Binär-Umkodierer (11) zugeführt erhält und der Vorwärts-Rückwärtszähler (34) Setzsignale (PR) bei Empfang einer zusätzlichen Angabe und Taktsignale (HR) zugeführt erhält, die vom Taktwiedergewinnungskreis (9) über seinen Takteingang zugeführt werden.

6. Kodiervorrichtung zur Durchführung des Verfahrens nach Anspruch 1 mit einem Binär-Binär-Umkodierer (6), der eine unterschiedliche Kombination von acht binären Daten für jede der möglichen Gruppierungen von vier Binärwerten (DB oder SI) ggfs. in Verbindung mit einer zusätzlichen Angabe liefert, und mit einem Binär-Ternär-Wandler, der jede Kombination von acht binären Daten, die aus dem Umkodierer kommen, in zwei Gruppen von vier Daten aufspaltet, so daß auf einer Übertragungsverbindung (2) ein resultierendes Signal übertragen wird, das unter gleichzeitiger Berücksichtigung einer Binärangabe jeder Gruppe von vier Binärdaten erhalten wird, dadurch gekennzeichnet, daß der Binär-Binär-Umkodierer (6) im wesentlichen einen reinen Lesespeicher (14) aufweist, der in einzeln adressierbarer Weise die verschiedenen Kombinationen der in Anwendung des Verfahrens gewählten acht Binärdaten enthält, wobei die Adressierung über einen Zusatzangabeneingang (VT) und vier binäre Informations- und/oder Signalisationsdateneingänge (DB, SI) unter Kontrolle eines Taktes (H/4) erfolgt.

**Claims**

1. A method for transcoding binary data for a time multiplex transmission, in which the successive binary data constituting each data item are transcoded four by four using a ternary code in which each possible group of four binary values corresponds to a combination of four ternary values chosen out of two different combinations attributed to the group in question, one of the two combinations attributed to the same group corresponding to the addition of a predetermined additional indication over the other, such that an identical data flow is conserved, regardless of whether additional indications are being transmitted or not, characterized in that the combinations corresponding to the transmission of a group with the addition of an additional indication show a higher weight than that which can be obtained by the association of four successive values taken out of two successive combinations corresponding to the transmission of two groups without addition of the additional indication, such that any fortuitous imitation of a combination bearing an additional indication is avoided in the sequence of successively transmitted ternary data.

2. A decoding device for implementing the method according to claim 1, characterized in that it comprises:
- a clock recovery circuit (9) at the output of a two-wire transmission link (2),
- a ternary-binary converter (8) connected to the output of the transmission link (2) parallelly with the clock recovery circuit (9) for detecting the electric level of each wire at the rhythm of the signal supplied by said clock circuit (9) in order to supply in groups of four data the data corresponding to the electric levels detected successively on each wire,

- a binary-binary transcoder (11) receiving simultaneously the data from the ternary-binary converter (8) arranged in two groups of four data, in order to derive therefrom either a group of four binary information or signalisation values (DB, SI) and possibly an additional indication (VT), or else an indication of abnormality (CX),

- a control circuit (10) connected to the output of the binary-binary transcoder (11) and to the output of the clock recovery circuit (9) for controlling the recovery of information (DB) and signalisation (SI) data by said transcoder (11).

3. A decoder device according to claim 2, characterized in that the ternary-binary converter (8) is composed of two register units (24, 25) respectively inserted between one terminal of the secondary winding of an output transformer (5) in the transmission link (2) and the binary-binary transcoder (11) in such a manner that each of them supplies in groups of four the data which they receive at a rhythm given by the clock recovery circuit (9).

4. A decoder device according to claim 2, characterized in that the binary-binary transcoder (11) comprises a read-only memory (31), the addressing inputs of which are connected to the output of a decoder (29) having eight inputs connected to the outputs of the register units (24, 25) in such a manner as to supply for each address either a group of four binary values (DB or SI) and possibly an additional indication (VT) or else an indication of abnormality (CX).

5. A decoder device according to claim 2, characterized in that the control circuit (10) comprises an automatic control unit (33) and an up-down counter (34), the automatic control unit receiving an internal locking information (TO) supplied by the up-down counter (34) and the additional indication (VT) supplied by the binary-binary transcoder (11), the up-down counter (34) receiving resetting signals (PR) on reception of an additional indication and the clock signals (HR) delivered by the clock recovery circuit (9) to its clock input.

6. A coder device for implementing the method according to claim 1, comprising a binary-binary transcoder (6) supplying a distinct association of eight binary data for each of the possible groups of four binary values (DB or SI) with or without an additional indication, and a binary-ternary converter subdividing each association of eight binary data received from the transcoder into two groups of four data such that a resulting signal is transmitted on the transmission link (2) taking into account simultaneously a binary data item of each group of four items, characterized in that the binary-binary transcoder (6) comprises substantially a read-only memory (14) containing in an individually addressable manner the different associations of eight binary data implemented in the method, the addressing being ensured via an input for additional indications (VT) and via four binary information and/or signalisation data inputs (DB, SI) under the control of a clock (H/4).

# FIG.1

0119140

# FIG.2

FIG.3

FIG.4